(19) Europäisches Patentamt
European Patent Office
Office européen des brevets

(11) **EP 2 792 889 B1**

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(51) Int Cl.:
***F15B 13/043*** *(2006.01)*

(21) Anmeldenummer: **14160612.9**

(22) Anmeldetag: **19.03.2014**

(54) **Stromregelventilbaugruppe**

Flow regulating valve assembly

Ensemble de vanne régulatrice de débit

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2013 DE 102013206977**

(43) Veröffentlichungstag der Anmeldung:
**22.10.2014 Patentblatt 2014/43**

(73) Patentinhaber: **ROBERT BOSCH GMBH**
**70442 Stuttgart (DE)**

(72) Erfinder: **Amrhein, Jan**
**Rochester Hills, 483093574 (US)**

(74) Vertreter: **Maiß, Harald**
**Bosch Rexroth AG**
**Patentabteilung**
**Ernst-Sachs-Straße 100**
**97424 Schweinfurt (DE)**

(56) Entgegenhaltungen:
**WO-A2-2007/149192     US-A- 4 779 836**
**US-A1- 2010 155 633**

EP 2 792 889 B1

## Beschreibung

Die Erfindung betrifft eine Stromregelventilbaugruppe gemäß dem Oberbegriff des Patentanspruchs 1.

Aus der US 4,779,836 ist eine derartige Steuerventilbaugruppe bekannt. Sie umfasst ein Gehäuse 1, in dem ein Ventilkolben 13 linearbeweglich aufgenommen ist. An dem Gehäuse sind ein erster und ein zweiter Arbeitsanschluss 2; 3 vorgesehen, welche über einen Ventilsitz am Gehäuse miteinander verbunden sind. Der Ventilsitz kann von dem Ventilkolben mit einer ersten Stirnfläche 14 verschlossen werden, wobei die gegenüberliegende in Schließrichtung wirkenden zweite Stirnfläche 16 des Ventilkolbens 13 zusammen mit dem Gehäuse einen Ventilraum 17 begrenzt. Zwischen dem Gehäuse und dem Ventilkolben ist eine verstellbare Drossel 18 vorgesehen, deren Drosselquerschnitt sich bei einer Verschiebung des Ventilkolbens 13 stetig ändert. Hierfür sind an der kreiszylindrischen Außenumfangsfläche des Ventilkolbens 13 in Richtung der Ventilkolbenachse verlaufende Kerben 18 vorgesehen, deren Tiefe sich kontinuierlich ändert. Die Kerben 18 sind so ausgelegt, dass, wenn der Ventilkolben 13 den Ventilsitz dicht verschließt, ein Restdrosselquerschnitt verbleibt, so dass immer eine Fluidverbindung zwischen dem ersten Arbeitsanschluss 2 und dem Ventilraum 17 vorhanden ist.

Im stationären Zustand der Ventilbaugruppe stellt sich die Lage des Ventilkolbens 13 so ein, dass die Kraft, welche der Druck im Ventilraum 17 auf die zweite Stirnfläche 16 ausübt, gleich der Kraft ist, welche die Drücke am ersten und am zweiten Arbeitsanschluss 2, 3 in Öffnungsrichtung auf den Ventilkolben 13 ausüben. Der Druck am ersten Arbeitsanschluss 2 wirkt dabei auf eine zentrale Kreisfläche 14, während der Druck am zweiten Arbeitsanschluss 3 auf eine umgebende Kreisringfläche 15 wirkt. Die Kreisfläche 14 und die Kreisringfläche 15 werden durch den Ventilsitz gegeneinander abgegrenzt.

Der Druck im Ventilraum 17 ergibt sich aus dem Druck am ersten Arbeitsanschluss 2 vermindert um den Druckabfall an der Drossel 18, der das Fluid über den im Ventilkoben 13 angeordneten Kanal 19 zugeführt wird. Der Druckabfall an der Drossel 18 ergibt sich aus dem Volumenstrom, welcher über die Drossel 18 fließt. Dieser Volumenstrom ist gleich dem Steuervolumenstrom, der aus dem Ventilraum 17 über ein Vorsteuerventil 26 zum zweiten Arbeitsanschluss 2 fließt. Der veränderliche Drosselquerschnitt, der im Wesentlichen proportional zur Öffnung des Ventilkolbens 13 zunimmt, bewirkt, dass der genannte Steuervolumenstrom proportional zum Hauptvolumenstrom ist, der vom ersten Arbeitsanschluss 2 zum zweiten Arbeitsanschluss 3 fließt. Da der Steuervolumenstrom deutlich kleiner als der Hauptvolumenstrom ist, ist die vorliegende Ventilbaugruppe ein Volumenstromverstärker. Der Vollständigkeit halber sei noch auf die Rückschlagventile 21; 22; 27; 28 hingewiesen, die es ermöglichen, die Ventilbaugruppe auch mit entgegen gesetzter Hauptstromrichtung, also vom zweiten Arbeitsanschluss 3 zum ersten Arbeitsanschluss 2, zu betreiben.

Häufig wird das Vorsteuerventil 26 elektrisch angesteuert, wobei ein Betriebsverhalten der Stromregelventilbaugruppe gewünscht ist, bei der der Hauptvolumenstrom allein vom Ansteuersignal des Vorsteuerventils 26 abhängt, so dass man einen Volumenstromsteller erhält. Dies ist allerdings nur näherungsweise der Fall, da der Steuervolumenstrom außer von der Stellung des Vorsteuerventils 26 auch von dem Druckabfall am Vorsteuerventil 26 abhängt, der wiederum vom Druck am ersten Arbeitsanschluss 2 abhängt.

Diese Abhängigkeit kann über Drucksensoren kompensiert werden, welche sehr genau ausgeführt sein müssen und damit teuer sind.

Weiterhin kann dieser Effekt teilweise durch eine Lastkompensation des Vorsteuerventils mit einer Druckwaage eliminiert werden. Trotzdem bleibt die Stromregelventilbaugruppe abhängig von den Drücken an den Arbeitsanschlüssen.

Aufgabe der vorliegenden Erfindung ist es ein Stromregeventilbaugruppe bereit zu stellen, bei der stets eine genaue Bestimmung des Hauptvolumenstroms ermöglicht.

Diese Aufgabe wird gelöst durch eine Stromregelventilbaugruppe mit den Merkmalen des Patentanspruchs 1.

Die beanspruchte Stromregelventilbaugruppe hat ein Gehäuse, in dem ein Ventilkolben linearbeweglich aufgenommen ist, wobei an dem Gehäuse ein erster und ein zweiter Arbeitsanschluss vorgesehen sind, die über einen Ventilsitz am Gehäuse miteinander verbindbar sind. Dadurch ist ein Hauptvolumenstrom einstellbar. Der Ventilkolben ist über eine erste am Ventilsitz angeordnete Stirnfläche mit dem Druck des ersten Arbeitanschlusses in Öffnungsrichtung und über eine Kreisringfläche des Ventilkolbens mit dem Druck des zweiten Arbeitanschlusses ebenfalls in Öffnungsrichtung beaufschlagt. Weiterhin ist der Ventilkolben in Schließrichtung über eine zweite Stirnfläche mit dem Druck des druckhöheren und damit als Eingangsanschluss wirkenden Arbeitanschlusses beaufschlagt. Dabei begrenzt die zweite Stirnfläche mit dem Gehäuse einen Ventilraum. Zwischen dem Gehäuse und dem Ventilkolben ist zwischen dem Gehäuse und den Ventilkolben eine verstellbare Drossel ausgebildet, deren Querschnitt sich bei Verschiebung des Ventilkolbens stetig ändert, wobei der druckhöhere Arbeitanschluss über die Drossel mit dem Ventilraum verbunden ist. Weiterhin ist eine Vorsteuerventilanordnung vorgesehen, über die eine Steuerleitung (auf)steuerbar ist, die den Ventilraum mit dem druckniedrigeren und damit als Ausgangsanschluss wirkenden Arbeitsanschluss verbindet. Erfindungsgemäß weist die Vorsteuerventilanordnung eine Konstantblende und ein als Druckwaage wirkendes stetig verstellbares 2/2 Wegeventil auf, dessen Ventilkörper in Schließrichtung von einem stromaufwärts der Konstantblende abgegriffenen Steuerdruck der Steuerleitung und in Öffnungsrichtung von einem Aktor und einem stromabwärts der Konstantblende abgegriffenen Steuerdruck der Steuerleitung beaufschlagt ist. Weiterhin ist ein Stellungserfassungsmittel zur Erfassung des Verschiebeweges oder der Position des Ventilkörpers des 2/2-Wegeventils vorgesehen. Aus der eingestellten Kraft am Aktor der Druckwaage und der Stellung des Ventilkörpers der Druckwaage kann rechnerisch der Fluidstrom vom Ventilraum zum druckniedrigeren und damit als Ausgangsanschluss wirkenden Arbeitsanschluss und draus die Druckdifferenz dazwischen bestimmt werden. Daraus lässt sich die Stellung des Ventilkolbens und damit der Hauptvolumenstrom vom druckhöheren zum druckniedrigeren Arbeitsanschluss mit deutlich verbesserter Genauigkeit berechnen.

Das Stellungserfassungsmittel kann ein Wegsensor sein. Das Stellungserfassungsmittel kann optisch, induktiv oder kapazitiv sein.

Weitere vorteilhafte Ausgestaltungen der Erfindung sind in den abhängigen Patentansprüchen beschrieben.

Gemäß einem ersten bevorzugten Ausführungsbeispiel ist der Aktor ein Elektromagnet, dessen Ansteuersignal Strom oder Spannung ist.

Dabei wird es besonders bevorzugt, wenn vom Stellungserfassungsmittel die Induktivität des Elektromagneten bestimmbar ist. Damit ist die erfindungsgemäße Stromregelventilbaugruppe besonders kostengünstig, da nur Strom- und Spannung am Elektromagneten bekannt sein müssen.

Gemäß einem zweiten Ausführungsbeispiel ist der Aktor eine Feder mit veränderlicher Vorspannung. Die Einstellung kann elektrisch, hydraulisch oder elektrohydraulisch erfolgen.

Wenn der Ventilkörper des 2/2 Wegeventils in Schließrichtung zusätzlich von einer Feder beaufschlagt ist, ist die Sicherheit der Stromregelventilbaugruppe erhöht, da die sie ohne Ansteuerung schließt.

Vorrichtungstechnisch einfach ist es, wenn der druckhöhere Arbeitanschluss über eine im Ventilkolben aufgenommene Kanalanordnung mit der Drossel verbindbar oder verbunden ist.

Bei einer besonders bevorzugten Weiterbildung wird dabei über die Kanalanordnung von beiden Arbeitsanschlüssen jeweils der druckhöhere Arbeitsanschluss mit der Drossel verbunden, während der andere Arbeitsanschluss gegen die Drossel abgesperrt ist.

Dann ist gemäß einer ersten Variante eine weitere Vorsteuerventilanordnung vorgesehen, über die eine weitere Steuerleitung von dem Ventilraum auch zum anderen Arbeitsanschluss (auf)steuerbar ist, wobei die weitere Vorsteuerventilanordnung prinzipiell wie die erstgenannte aufgebaut ist. Sie hat demnach auch eine Konstantblende und ein als Druckwaage wirkendes stetig verstellbares 2/2 Wegeventil. Dessen Ventilkörper ist in Schließrichtung von einem stromaufwärts der Konstantblende abgegriffenen Steuerdruck der Steuerleitung und in Öffnungsrichtung von einem Aktor und einem stromabwärts der Konstantblende abgegriffenen Steuerdruck der Steuerleitung beaufschlagt. Damit ist sicher gestellt, dass der Ventilraum stets mit dem druckniedrigeren Arbeitsanschluss über die jeweilige Vorsteuerventilanordnung verbunden wird. Dann können die beiden Arbeitsanschlüsse auch in Gegenrichtung durchströmt werden, so dass die erfindungsgemäße Stromregelventilbaugruppe bidirektional funktioniert.

Vorzugsweise sind dabei stromaufwärts der beiden Vorsteuerventilanordnungen ein gemeinsame Steuerleitung und ein Verzweigung vorgesehen, so dass sich nur ein Ausgang (z.B. Bohrung) aus dem Ventilraum ergibt.

Vorzugsweise ist die weitere Vorsteuerventilanordnung baugleich mit der ersten Vorsteuerventilanordnung ausgestaltet. Damit ergeben sich Gleichteile und eine geringere Teilevielfalt.

Gemäß einer zweiten Variante sind stromabwärts der Vorsteuerventilanordnung eine Verzweigung und zwei Zweigleitungen (in) der Steuerleitung vorgesehen, von denen jede in einen der Arbeitsanschlüsse mündet. In jeder Zweigleitung ist ein vom jeweiligen Arbeitsanschluss zur Verzweigung schließendes Rückschlagventil vorgesehen. Damit ist sicher gestellt, dass der Ventilraum stets mit dem druckniedrigeren Arbeitsanschluss über die Vorsteuerventilanordnung verbunden wird. Dann können die beiden Arbeitsanschlüsse auch in Gegenrichtung durchströmt werden, so dass die erfindungsgemäße Stromregelventilbaugruppe bidirektional funktioniert.

Die Kanalanordnung kann einen am Ventilkolben gebildeten ersten Eingang im Bereich des ersten Arbeitsanschlusses, einen am Ventilkolben gebildeten zweiten Eingang im Bereich des zweiten Arbeitsanschlusses, ein Wechselventil und eine am Ventilkolben gebildete Mündung in die als Kerbe oder Kerben gebildete Drossel aufweisen.

Abweichend kann die Kanalanordnung auch zwei getrennte Kanäle aufweist, die jeweils eine Mündung in die als Kerbe oder Kerben gebildete Drossel aufweisen, wobei in jedem Kanal ein vom jeweiligen Arbeitsanschluss zu Drossel öffnendes Rückschlagventil angeordnet ist.

In beiden Ausführungsformen der Kanalanordnung ist sicher gestellt, dass jeweils der druckhöhere Arbeitsanschluss über die Drossel mit der dem Ventilraum verbunden ist. Dann können die beiden Arbeitsanschlüsse auch in Gegenrichtung durchströmt werden, so dass die erfindungsgemäße Stromregelventilbaugruppe bidirektional funktioniert.

Die Konstantblende kann stromauf oder stromab des 2/2 Wegeventils in der Steuerleitung angeordnet sein.

Um den Ventilraum abzusichern kann im Ventilkolben ein vom Ventilraum zum zweiten Arbeitsanschluss öffnendes Druckbegrenzungsventil vorgesehen sein. Damit ist kein weiteres großes Druckbegrenzungsventil nötig.

Um Kavitation zu verhindern und ein großes Tanknachsaugventil zu vermeiden kann im Ventilkolben ein vom Ventilraum zum ersten Arbeitsanschluss öffnendes Rückschlagventil vorgesehen sein.

Bei einem Anwendungsfall der erfindungsgemäßen Stromregelventilbaugruppe ist der druckhöheren Arbeitsanschluss an einen Verbraucher angeschlossen, während an den druckniedrigeren Arbeitsanschluss ein Tank angeschlossen ist.

Im Folgenden werden anhand der Figuren verschiede Ausführungsbeispiele der Erfindung detailliert beschrieben. Es zeigen

Figur 1 ein erstes Ausführungsbeispiel einer erfindungsgemäßen Stromregelventilbaugruppe in einer schematischen Darstellung; und

Figur 2 ein zweites Ausführungsbeispiel einer erfindungsgemäßen Stromregelventilbaugruppe in einer schematischen Darstellung.

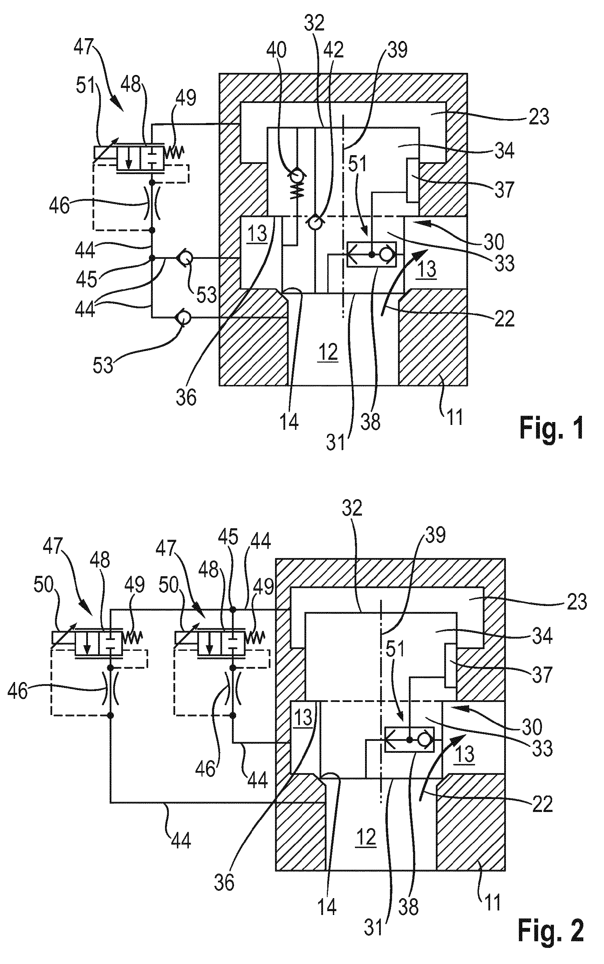

Figur 1 und 2 zeigen jeweils ein Ausführungsbeispiel einer erfindungsgemäßen Stromregelventilbaugruppe. Sie umfasst ein Gehäuse 11, in dem ein Ventilkolben 30 linearbeweglich aufgenommen ist. Der Ventilkolben 30 ist im Wesentlichen in Form eines Stufenzylinders mit einem ersten und einem zweiten kreiszylindrischen Abschnitt 33; 34 ausgeführt. An dem Gehäuse 11 ist ein Ventilsitz 14 vorgesehen, der zur Anlage mit der ersten Stirnfläche 31 des Ventilkolbens 30 am ersten zylindrischen Abschnitt 33 bestimmt ist, so dass der Ventilsitz 14 durch den Ventilkolben 30 dicht verschlossen werden kann. An dem Gehäuse 11 sind ein erster und ein zweiter Arbeitsanschluss 12; 13 vorgesehen, welche über den Ventilsitz 14 miteinander verbunden sind. Die Stromregelventilbaugruppe ist dazu bestimmt, einen Hauptvolumenstrom 22 einzustellen, der wahlweise vom ersten zum zweiten Arbeitsanschluss 12, 13 oder umgekehrt fließt.

Der Druck am ersten Arbeitsanschluss 12 wirkt auf die kreisförmige erste Stirnfläche 31 am ersten zylindrischen Abschnitt 33, welcher den kleineren Durchmesser der beiden zylindrischen Abschnitte 33; 34 aufweist. Der Druck am zweiten Arbeitsanschluss 13 wirkt hingegen auf die Kreisringfläche 36 am Übergang zwischen dem ersten und dem zweiten zylindrischen Abschnitt 33; 34. Die beiden genannten Drücke sind über eine Kanalanordnung 51, die ein Wechselventil 38 aufweist, mit einer stetig verstellbaren Drossel 37 verbunden, so dass der jeweils höhere Druck an der Drossel 37 anliegt.

Die stetig verstellbare Drossel 37 wird von mehreren in Richtung der Ventilkolbenbeziehungsweise Zylinderachse 39 verlaufenden Schlitzen bzw. Kerben 37 an der Außenumfangsfläche des zweiten zylindrischen Abschnitts 34 gebildet, von denen in den Figuren 1 und 2 jeweils nur ein Schlitz 37 dargestellt ist. Die Schlitze 37 sind so angeordnet, dass ein Restdrosselquerschnitt zwischen dem Ventilkolben 30 und dem Gehäuse 11 verbleibt, auch wenn der Ventilkolben 30 den Ventilsitz 14 dicht verschließt. Wird nun der Ventilkolben 30 in den Figuren 1 und 2 nach oben verschoben, um den Ventilsitz 14 freizugeben, so erweitert sich der Drosselquerschnitt im Wesentlichen proportional zur Verschiebung des Ventilkolbens 30. Gleiches trifft auf den Öffnungsquerschnitt am Ventilsitz 14 zu.

Die der ersten Stirnfläche 31 gegenüberliegende zweite Stirnfläche 32 begrenzt zusammen mit dem Gehäuse 11 einen Ventilraum 23.

Figur 1 zeigt ein im Ventilkolben 30 angeordnetes vom Ventilraum 23 zum zweiten Arbeitsanschluss 13 öffnendes Druckbegrenzungsventil 40. Es ist als federvorgespanntes Rückschlagventil ausgeführt. Um Kavitation zu verhindern, ist im Ventilkolben 30 ein vom Ventilraum 23 zum ersten Arbeitsanschluss 12 öffnendes Rückschlagventil 42 vorgesehen, das öffnet, wenn der Druck im Ventilraum 23 unter den des ersten Arbeitsanschlusses 12 fallen sollte.

Erfindungsgemäß ist eine Vorsteuerung mit einer Steuerleitung und mit einer Druckwaage vorgesehen. In Schließrichtung wirkt eine Feder und der Druck stromaufwärts bzw. vor einer Konstantblende. In Öffnungsrichtung wirkt eine Kraft eines Elektromagneten und der Druck stromabwärts bzw. nach der Konstantblende. Die Druckwaage selbst kann stromaufwärts oder stromabwärts zur Konstantblende angeordnet sein. Genauer gesagt ist im ersten Ausführungsbeispiel gemäß Figur 1 eine verzweigte Steuerleitung 44 vorgesehen, die eingangsseitig an den Ventilraum 23 angeschlossen ist und eine Verzweigung 45 aufweist, die über je eine Zweigleitung mit den beiden Arbeitsanschlüssen 12, 13 verbunden ist. Stromaufwärts bzw. vor der Verzweigung 45 ist eine Konstantblende 46 mit einem als Druckwaage wirkenden 2/2-Wegeventil 47 angeordnet. Stromabwärts bzw. nach der Verzweigung 45 ist in jeder Zweigleitung ein vom Ventilraum 23 zum jeweiligen Arbeitsanschluss 12, 13 öffnendes Rückschlagventil 53 vorgesehen.

Im zweiten Ausführungsbeispiel gemäß Figur 2 ist ebenfalls eine verzweigte Steuerleitung 44 vorgesehen, die eingangsseitig an den Ventilraum 23 angeschlossen ist und eine Verzweigung 45 aufweist, die über je eine Zweigleitung mit den beiden Arbeitsanschlüssen 12, 13 verbunden ist. Stromabwärts bzw. nach der Verzweigung 45 ist in jeder Zweigleitung eine Konstantblende 46 mit einem als Druckwaage wirkenden 2/2-Wegeventil 47 angeordnet.

Folgender Text gilt (wieder) für beide Ausführungsbeispiele gemäß den Figuren 1 und 2: Ein Ventilkörper 48 des 2/2-Wegeventils bzw. der Druckwaage 47 ist in Schließrichtung von einer Feder 49 und dem Druck stromaufwärts bzw. vor der Konstantblende 46 beaufschlagt. In Öffnungsrichtung ist der Ventilkörper 48 der Druckwaage 47 vom Druck stromabwärts bzw. nach der Konstantblende 46 und von einem Elektromagneten 50 beaufschlagt. Das 2/2 Wegeventil kann stromaufwärts oder stromabwärts zur Konstantblende angeordnet sein. Bei Betätigung des Elektromagneten 50 wird die Druckwaage 47 gegen die Feder 49 ausgelenkt und eine Verbindung vom Ventilraum 23 zum Arbeitsanschluss 12, 13 hergestellt. Es fließt ein Volumenstrom über die Vorsteuerung, welcher ein Druckgefälle über die Konstantblende 47 erzeugt. Dieses Druckgefälle bewirkt, dass der Ventilkörper 48 der Druckwaage 47 in schließende Richtung geschoben wird. Der Ventilkörper 48 der Druckwaage 47 steht damit nicht mehr auf der Position auf der er stehen würde wenn nur die Kräfte des Elektromagneten 50 und der Feder 49 auf ihn wirken würden. Die aktuelle Position der Druckwaage 47 ist demnach ein Maß für den Volumenstrom über die Vorsteuerung.

Dazu folgt ein Beispiel: Der Elektromagnet 50 wird betätigt und stellt eine konstante Kraft von 1 N ein. Die Feder 49 hat einen Federwert von 1 N/mm, d.h. die Druckwaage 47 hätte einen Hub von 1 mm. Es wird angenommen, dass die Druckdifferenz zwischen dem Ventilraum 23 und dem druckniedrigeren Arbeitsanschluss 13 relativ gering ist. Aufgrund der Öffnung der Druckwaage 47 und dieser Druckdifferenz würde sich ein relativ kleiner Volumenstrom in der Vorsteuerung einstellen. Dieser Volumenstrom erzeugt nun eine Druckdifferenz, die die Druckwaage 47 etwas weiter zuschiebt. Im Beispiel wird die Druckwaage auf 0,9mm verschoben. Steigt nun die Druckdifferenz zwischen den beiden Arbeitsanschlüssen 12, 13, steigt auch der Volumenstrom über die Vorsteuerung durch die Steuerleitung 44. Dies führt zu einer Erhöhung der Druckdifferenz über die Konstantblende 46 und damit zu einem weiteren Zuschieben der Druckwaage 47 z.B. auf 0,5mm.

Erfindungsgemäß ist durch Einstellen einer Kraft des Elektromagneten 50 und Messen des resultierenden Druckwaagenhubes der Volumenstrom über die Vorsteuerung eindeutig bestimmbar.

Damit sind alle wichtigen Größen in der Vorsteuerung bekannt:

- Volumenstrom über die Vorsteuerung $Q_{23/13}$
- Druckgefälle über die Konstantblende 46
- Hub des Ventilkörpers 48 der Druckwaage 47.

Mit diesen bekannten Größen kann nun wieder auf die Druckdifferenz zwischen Ventilraum 23 und Arbeitsanschluss 13 geschlossen werden. Diese Druckdifferenz ist über die Blendengleichung eindeutig bestimmbar. Es gilt:

$$\Delta p_{23/13} = [Q_{23/13} / K * A_{eff}]^2$$

wobei $A_{eff}$ die effektive Querschnittsfläche der Konstantblende 46 und der Blende der Druckwaage 47 darstellt.

Mit $\Delta p_{23/13}$ ist über die Kräftebilanz am Hauptventilkolben 30 auch die Druckdifferenz $\Delta p_{12/23}$ bekannt.

Mit dieser Druckdifferenz $\Delta p_{12/23}$ und dem Vorsteuervolumenstrom $Q_{23/13}$ kann wiederum auf den Hub des Hauptventilkolbens 30 geschlossen werden.

Durch Einstellen der Kraft des Elektromagneten 50 und Messen des resultierenden Hub des Ventilkörpers 48 der Druckwaage 47 sind alle Systemgrößen bekannt:

- Hauptvolumenstrom 22 über die Hauptkante
- Druckdifferenz über der Hauptkante
- Hub des Hauptventilkolbens 30

Offenbart ist eine Stromregelventilbaugruppe mit einem als Sitzventil ausgebildeten Hauptventil. Dessen Ventilkolben ist über eine erste am Ventilsitz angeordnete Stirnfläche mit dem Druck eines ersten Arbeitanschlusses und über eine Kreisringfläche des Ventilkolbens mit dem Druck eines zweiten Arbeitanschlusses ebenfalls in Öffnungsrichtung beaufschlagt. Weiterhin ist der Ventilkolben in Schließrichtung über eine zweite Stirnfläche mit dem Druck des druckhöheren und damit als Eingangsanschluss wirkenden Arbeitanschlusses beaufschlagt. Zwischen einem Gehäuse des Hauptventils und dem Ventilkolben ist eine verstellbare Drossel ausgebildet, deren Querschnitt sich bei Verschiebung des Ventilkolbens stetig ändert, wobei der druckhöhere Arbeitanschluss über diese Drossel mit der zweiten Stirnfläche verbunden ist. Weiterhin ist eine Vorsteuerventilanordnung vorgesehen, über die eine Steuerleitung (auf)steuerbar ist, die die zweite Stirnfläche mit dem druckniedrigeren und damit als Ausgangsanschluss wirkenden Arbeitanschluss verbindet. Die Vorsteuerventilanordnung weist eine Konstantblende und ein als Druckwaage wirkendes stetig verstellbares 2/2 Wegeventil auf, das in Schließrichtung von einem stromaufwärts der Konstantblende abgegriffenen Steuerdruck der Steuerleitung und in Öffnungsrichtung von einem Aktor und einem stromabwärts der Konstantblende abgegriffenen Steuerdruck der Steuerleitung beaufschlagt ist. Weiterhin ist ein Stellungserfassungsmittel zur Erfassung des Verschiebeweges oder der Position des Ventilkörpers des 2/2-Wegeventils vorgesehen.

Bezugszeichenliste

| | |
|---|---|
| 11 | Gehäuse |
| 12 | erster Arbeitsanschluss |
| 13 | zweiter Arbeitsanschluss |
| 14 | Ventilsitz |
| 22 | Hauptvolumenstrom |
| 23 | Ventilraum |
| 30 | Ventilkolben |
| 31 | erste Stirnfläche |
| 32 | zweite Stirnfläche |
| 33 | erster zylindrischer Abschnitt |
| 34 | zweiter zylindrischer Abschnitt |
| 35 | Kreisfläche |
| 36 | Kreisringfläche |
| 37 | Drossel |
| 38 | Wechselventil |

39 Zylinderachse
40 Druckbegrenzungsventil
42 Rückschlagventil
44 Steuerleitung
45 Verzweigung
46 Konstantblende
47 2/2-Wegeventil
48 Ventilkörper
49 Feder
50 Elektromagnet
51 Kanalanordnung
53 Rückschlagventil

**Patentansprüche**

1. Stromregelventilbaugruppe (10) mit einem Gehäuse (11), in dem ein Ventilkolben (30) linearbeweglich aufgenommen ist, wobei an dem Gehäuse (11) ein erster und ein zweiter Arbeitsanschluss (12, 13) vorgesehen sind, die über einen Ventilsitz (14) am Gehäuse (11) miteinander verbindbar sind, und wobei der Ventilkolben (30) über eine erste Stirnfläche (31) mit dem Druck des ersten Arbeitanschlusses (12) in Öffnungsrichtung und über eine Kreisringfläche (36) mit dem Druck des zweiten Arbeitanschlusses (13) in Öffnungsrichtung beaufschlagt ist, und wobei der Ventilkolben (30) über eine zweite Stirnfläche (32) mit dem Druck des druckhöheren Arbeitanschlusses (12) in Schließrichtung beaufschlagt ist, wobei die zweite Stirnfläche (32) mit dem Gehäuse (11) einen Ventilraum (23) begrenzt, und wobei durch das Gehäuse (11) und den Ventilkolben (30) eine verstellbare Drossel (37) ausgebildet ist, deren Querschnitt sich bei Verschiebung des Ventilkolbens (30) stetig ändert, wobei der druckhöhere Arbeitanschluss (12) über die Drossel (37) mit dem Ventilraum (23) verbunden ist, und mit einer Vorsteuerventilanordnung, die in einer den Ventilraum (23) mit dem druckniedrigeren Arbeitsanschluss (13) verbindenden Steuerleitung (44) angeordnet ist, **dadurch gekennzeichnet, dass** die Vorsteuerventilanordnung eine Konstantblende (46) und ein stetig verstellbares 2/2 Wegeventil (47) hat, dessen Ventilkörper (48) in Schließrichtung von einem stromaufwärts der Konstantblende (46) abgegriffenen Steuerdruck der Steuerleitung (44) und in Öffnungsrichtung von einem Aktor und einem stromabwärts der Konstantblende (46) abgegriffenen Steuerdruck der Steuerleitung (44) beaufschlagt ist, und dessen Position über ein Stellungserfassungsmittel erfassbar ist.

2. Stromregelventilbaugruppe nach Anspruch 1, wobei der Aktor ein Elektromagnet (50) ist, dessen Ansteuersignal Strom oder Spannung ist.

3. Stromregelventilbaugruppe nach Anspruch 2, wobei vom Stellungserfassungsmittel die Induktivität des Elektromagneten (50) bestimmbar ist.

4. Stromregelventilbaugruppe nach Anspruch 1, wobei der Aktor eine Feder mit veränderlicher Vorspannung ist.

5. Stromregelventilbaugruppe einem der vorhergehenden Ansprüche, wobei das 2/2 Wegeventil (47) in Schließrichtung von einer Feder (49) beaufschlagt ist.

6. Stromregelventilbaugruppe nach einem der vorhergehenden Ansprüche, wobei der druckhöhere Arbeitanschluss (12) über eine im Ventilkolben (30) aufgenommene Kanalanordnung (51) mit der Drossel (37) verbindbar oder verbunden ist.

7. Stromregelventilbaugruppe nach Anspruch 6, wobei über die Kanalanordnung (51) von beiden Arbeitsanschlüssen (12, 13) stets der druckhöhere Arbeitsanschluss (12) mit der Drossel (37) verbunden ist, während der andere Arbeitsanschluss (13) gegen die Drossel (37) abgesperrt ist.

8. Stromregelventilbaugruppe nach Anspruch 7 mit einer weiteren Steuerleitung oder mit einem Zweig der Steuerleitung (44), über die oder den der Ventilraum (23) auch mit dem anderen Arbeitsanschluss (13) über eine weiteren Vorsteuerventilanordnung verbindbar ist, wobei auch die weitere Vorsteuerventilanordnung eine Konstantblende (46) und ein stetig verstellbares 2/2 Wegeventil (47) hat, dessen Ventilkörper (48) in Schließrichtung von einem stromaufwärts der Konstantblende (46) abgegriffenen Steuerdruck der Steuerleitung oder des Zweiges und in Öffnungsrichtung von einem Aktor und einem stromabwärts der Konstantblende (46) abgegriffenen Steuerdruck der Steuerleitung oder des Zweiges beaufschlagt ist.

9. Stromregelventilbaugruppe nach Anspruch 7, wobei stromabwärts der Vorsteuerventilanordnung eine Verzweigung (45) und zwei Zweigleitungen der Steuerleitung (44) vorgesehen sind, von denen jede in einen der Arbeitsanschlüsse (12, 13) mündet, und wobei in jeder Zweigleitung ein vom jeweiligen Arbeitsanschluss (12, 13) zur Verzweigung schließendes Rückschlagventil (53) vorgesehen ist.

10. Stromregelventilbaugruppe nach einem der Ansprüche 6 bis 9, wobei die Kanalanordnung (51) einen am Ventilkolben (30) gebildeten ersten Eingang im Bereich des ersten Arbeitsanschlusses (12), einen am Ventilkolben (30) gebildeten zweiten Eingang im Bereich des zweiten Arbeitsanschlusses (13), ein Wechselventil (38) und eine am Ventilkolben (30) gebildete Mündung in die als Kerbe oder Kerben gebildete Drossel (37) aufweist.

**11.** Stromregelventilbaugruppe nach einem der Ansprüche 6 bis 9, wobei die Kanalanordnung zwei getrennte Kanäle aufweist, die jeweils eine Mündung in die als Kerbe oder Kerben gebildete Drossel aufweisen, wobei in jedem Kanal ein vom jeweiligen Arbeitsanschluss zu Drossel öffnendes Rückschlagventil angeordnet ist.

**12.** Stromregelventilbaugruppe nach einem der vorhergehenden Ansprüche, wobei die Konstantblende (46) stromauf des 2/2 Wegeventils (47) in der Steuerleitung (44) angeordnet ist.

**13.** Stromregelventilbaugruppe nach einen der Ansprüche 1 bis 11, wobei die Konstantblende (46) stromab des 2/2 Wegeventils (47) in der Steuerleitung (44) angeordnet ist.

**14.** Stromregelventilbaugruppe nach einem der vorhergehenden Ansprüche, wobei im Ventilkolben (30) ein vom Ventilraum (23) zum zweiten Arbeitsanschluss (13) öffnendes Druckbegrenzungsventil (40) vorgesehen ist.

**15.** Stromregelventilbaugruppe nach einem der vorhergehenden Ansprüche, wobei im Ventilkolben (30) ein vom Ventilraum (23) zum ersten Arbeitsanschluss (12) öffnendes Rückschlagventil (42) vorgesehen ist.

**Claims**

**1.** Flow regulating valve subassembly (10) with a housing (11), in which a valve piston (30) is accommodated linearly movably, there being provided in the housing (11) a first and a second working connection (12, 13) which are connectable to one another via a valve seat (14) on the housing (11), with the valve piston (30) being acted upon, via a first end face (31), by the pressure of the first working connection (12) in the opening direction and, via an annular surface (36), by the pressure of the second working connection (13) in the opening direction, and the valve piston (30) being acted upon in the closing direction, via a second end face (32), by the pressure of the higher-pressure working connection (12), the second end face (32) delimiting with the housing (11) a valve space (23), and there being formed by the housing (11) and the valve piston (30) an adjustable throttle (37), the cross section of which changes continuously during displacement of the valve piston (30), the higher-pressure working connection (12) being connected to the valve space (23) via the throttle (37), and with a pilot control valve arrangement which is arranged in a control line (44) connecting the valve space (23) to the lower-pressure working connection (13), **characterized in that** the pilot control valve arrangement has a fixed displacement diaphragm (46) and a continuously adjustable 2/2-way valve (47), the valve body (48) of which is acted upon in the closing direction by a control pressure, picked off upstream of the fixed displacement diaphragm (46), of the control line (44) and in the opening direction by an actuator and by a control pressure, picked off downstream of the fixed displacement diaphragm (46), of the control line (44), and the position of which can be detected via a position detection means.

**2.** Flow regulating valve subassembly according to Claim 1, the actuator being an electromagnet (50), the activation signal of which is current or voltage.

**3.** Flow regulating valve subassembly according to Claim 2, the inductance of the electromagnet (50) being determinable by the position detection means.

**4.** Flow regulating valve subassembly according to Claim 1, the actuator being a spring with variable prestress.

**5.** Flow regulating valve subassembly according to one of the preceding claims, the 2/2-way valve (47) being acted upon in the closing direction by a spring (49).

**6.** Flow regulating valve subassembly according to one of the preceding claims, the higher-pressure working connection (12) being connectable or connected to the throttle (37) via a duct arrangement (51) accommodated in the valve piston (30).

**7.** Flow regulating valve subassembly according to Claim 6, always the higher-pressure working connection (12) being connected to the throttle (37) via the duct arrangement (51) of the two working connections (12, 13), while the other working connection (13) is shut off with respect to the throttle (37).

**8.** Flow regulating valve subassembly according to Claim 7, with a further control line or with a branch of the control line (44), via which the valve space (23) is also connectable to the other working connection (13) via a further pilot control valve arrangement, the further pilot control valve arrangement also having a fixed displacement diaphragm (46) and a continuously adjustable 2/2-way valve (47), the valve body (48) of which is acted upon in the closing direction by a control pressure, picked off upstream of the fixed displacement diaphragm (46), of the control line or of the branch and in the opening direction by an actuator and by a control pressure, picked off downstream of the fixed displacement diaphragm (46), of the control line or of the branch.

**9.** Flow regulating valve subassembly according to Claim 7, a branch (45) and two branch lines of the control line (44), each of which issues into one of the working connections (12, 13), being provided downstream of the pilot control valve arrangement, and there being provided in each branch line a nonreturn valve (53) closing from the respective working connection (12, 13) to the branch.

10. Flow regulating valve subassembly according to one of Claims 6 to 9, the duct arrangement (51) having a first inlet, formed at the valve piston (30), in the region of the first working connection (12), a second inlet, formed at the valve piston (30), in the region of the second working connection (13), a shuttle valve (38) and an issue, formed at the valve piston (30), into the throttle (37) formed as a notch or notches.

11. Flow regulating valve subassembly according to one of Claims 6 to 9, the duct arrangement having two separate ducts which have in each case an issue into the throttle formed as a notch or notches, there being arranged in each duct a nonreturn valve opening from the respective working connection to the throttle.

12. Flow regulating valve subassembly according to one of the preceding claims, the fixed displacement diaphragm (46) being arranged upstream of the 2/2-way valve (47) in the control line (44).

13. Flow regulating valve subassembly according to one of Claims 1 to 11, the fixed displacement diaphragm (46) being arranged downstream of the 2/2-way valve (47) in the control line (44).

14. Flow regulating valve subassembly according to one of the preceding claims, there being provided in the valve piston (30) a pressure limiting valve (40) opening from the valve space (23) to the second working connection (13).

15. Flow regulating valve subassembly according to one of the preceding claims, there being provided in the valve piston (30) a nonreturn valve (42) opening from the valve space (23) to the first working connection (12).

**Revendications**

1. Module de soupape de régulation de débit (10) comprenant un boîtier (11), dans lequel est reçu, de manière déplaçable linéairement, un piston de soupape (30), un premier et un deuxième raccord de travail (12, 13) étant prévus au niveau du boîtier (11), lesquels peuvent être connectés l'un à l'autre par le biais d'un siège de soupape (14) au niveau du boîtier (11), et le piston de soupape (30) étant sollicité par le biais d'une première surface frontale (31) avec la pression du premier raccord de travail (12) dans la direction d'ouverture et par le biais d'une surface annulaire circulaire (36) avec la pression du deuxième raccord de travail (13) dans la direction d'ouverture, et le piston de soupape (30) étant sollicité par le biais d'une deuxième surface frontale (32) avec la pression du raccord de travail (12) de plus haute pression dans la direction de fermeture, la deuxième surface frontale (32) délimitant avec le boîtier (11) un espace de soupape (23), et un étranglement réglable (37) étant réalisé par le boîtier (11) et le piston de soupape (30), dont la section transversale varie de manière continue lors du déplacement du piston de soupape (30), le raccord de travail (12) de plus haute pression étant connecté par le biais de l'étranglement (37) à l'espace de soupape (23), et comprenant un agencement de soupape pilote qui est disposé dans une conduite de commande (44) reliant l'espace de soupape (23) au raccord de travail (13) de plus faible pression, **caractérisé en ce que** l'agencement de soupape pilote présente un diaphragme constant (46) et une soupape à 2/2 voies réglable de manière continue (47), dont le corps de soupape (48) est sollicité dans la direction de fermeture par une pression de commande de la conduite de commande (44) prélevée en amont du diaphragme constant (46) et dans la direction d'ouverture par un actionneur et une pression de commande de la conduite de commande (44) prélevée en aval du diaphragme constant (46), et dont la position peut être détectée par le biais d'un moyen de détection de position.

2. Module de soupape de régulation de débit selon la revendication 1, dans lequel l'actionneur est un électroaimant (50) dont le signal de commande est un courant ou une tension.

3. Module de soupape de régulation de débit selon la revendication 2, dans lequel l'inductance de l'électroaimant (50) peut être déterminée par le moyen de détection de courant.

4. Module de soupape de régulation de débit selon la revendication 1, dans lequel l'actionneur est un ressort avec une précontrainte variable.

5. Module de soupape de régulation de débit selon l'une quelconque des revendications précédentes, dans lequel la soupape à 2/2 voies (47) est sollicitée dans la direction de fermeture par un ressort (49).

6. Module de soupape de régulation de débit selon l'une quelconque des revendications précédentes, dans lequel le raccord de travail (12) de plus haute pression peut être connecté ou est connecté à l'étranglement (37) par le biais d'un agencement de canal (51) reçu dans le piston de soupape (30).

7. Module de soupape de régulation de débit selon la revendication 6, dans lequel, parmi les deux raccords de travail (12, 13), c'est toujours le raccord de travail (12) de plus haute pression qui est connecté à l'étranglement (37) par le biais de l'agencement de canal (51), tandis que l'autre raccord de travail (13) est bloqué par rapport à l'étranglement (37).

8. Module de soupape de régulation de débit selon la revendication 7, comprenant une conduite de commande supplémentaire ou une branche de la conduite de commande (44), par le biais de laquelle l'espace de soupape (23) peut également être connecté à l'autre raccord de travail (13) par le biais d'un agencement de soupape pilote supplémentaire, l'agencement de soupape pilote supplémentaire ayant également un diaphragme constant (46) et une soupape à 2/2 voies réglable de manière continue (47), dont le corps de soupape (48) est sollicité dans la direction de fermeture par une pression de commande de la conduite de commande ou de la branche prélevée en amont du diaphragme constant (46) et dans la direction d'ouverture par un actionneur et une pression de commande de la conduite de commande ou de la branche prélevée en aval du diaphragme constant (46).

9. Module de soupape de régulation de débit selon la revendication 7, dans lequel l'agencement de soupape pilote présente une ramification (45) et deux conduites de branchement de la conduite de commande (44) sont prévues, dont chacune débouche dans l'un des raccords de travail (12, 13), et une soupape de non-retour (53) se fermant depuis le raccord de travail respectif (12, 13) vers la ramification est prévue dans chaque conduite de branchement.

10. Module de soupape de régulation de débit selon l'une quelconque des revendications 6 à 9, dans lequel l'agencement de canal (51) présente une première entrée formée au niveau du piston de soupape (30) dans la région du premier raccord de travail (12), une deuxième entrée formée au niveau du piston de soupape (30) dans la région du deuxième raccord de travail (13), une soupape d'échange (38) et une embouchure formée au niveau du piston de soupape (30) dans l'étranglement (37) formé en tant qu'encoche ou encoches.

11. Module de soupape de régulation de débit selon l'une quelconque des revendications 6 à 9, dans lequel l'agencement de canal présente deux canaux séparés qui présentent à chaque fois une embouchure dans l'étranglement formé en tant qu'encoche ou encoches, une soupape de non-retour s'ouvrant depuis le raccord de travail respectif vers l'étranglement étant disposée dans chaque canal.

12. Module de soupape de régulation de débit selon l'une quelconque des revendications précédentes, dans lequel le diaphragme constant (46) est disposé en amont de la soupape à 2/2 voies (47) dans la conduite de commande (44).

13. Module de soupape de régulation de débit selon l'une quelconque des revendications 1 à 11, dans lequel le diaphragme constant (46) est disposé en aval de la soupape à 2/2 voies (47) dans la conduite de commande (44).

14. Module de soupape de régulation de débit selon l'une quelconque des revendications précédentes, dans lequel une soupape de limitation de la pression (40) s'ouvrant depuis l'espace de soupape (23) vers le deuxième raccord de travail (13) est prévue dans le piston de soupape (30).

15. Module de soupape de régulation de débit selon l'une quelconque des revendications précédentes, dans lequel une soupape de non-retour (42) s'ouvrant depuis l'espace de soupape (23) vers le premier raccord de travail (12) est prévue dans le piston de soupape (30).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4779836 A